# DEMANDE DE BREVET EUROPEEN

(11) **EP 0 698 470 A1**
(43) Date de publication de la demande: **28.02.1996**
(21) Numéro de dépôt: 95202113.7
(22) Date de dépôt: 02.08.1995
(51) Int. Cl.: B29C 47/02, B29C 47/20

(54) **Moyens et procédé d'application d'une couche de finition de matière plastique à la surface d'un tuyau; tuyau revêtu**

(30) Priorité: 16.08.1994 BE 9400741; 27.12.1994 BE 9401175
(71) Demandeur: POLVA PIPELIFE B.V., NL-1601 MA Enkhuizen (NL)
(72) Inventeur: Dehennau, Claude, B-1800 Vilvoorde (BE); Dupont, Serge, B-1800 Vilvoorde (BE)
(74) Mandataire: de Bruijn, Leendert C.

(57) **Abrégé**

Moyens pour l'application d'une couche de finition de matière plastique à la surface d'un tuyau, comprenant une bague (1) dont le diamètre d'entrée (2) est supérieur à son diamètre de sortie (3), la surface intérieure (4) de ladite bague assurant en outre une variation dégressive du diamètre intérieur entre son entrée et sa sortie; procédé d'application d'une couche de finition dans lequel ces moyens sont utilisés et tuyau revêtu.

## Description

La présente invention concerne des moyens et un procédé pour l'application d'une couche de finition de matière plastique à la surface d'un tuyau, ainsi qu'un tuyau revêtu.

Pour le transport de fluides, en particulier de fluides sous pression, on utilise couramment des tuyaux extrudés à base de matière plastique, munis de divers matériaux de renforcement. Ceux-ci permettent d'améliorer leur résistance à l'éclatement, c'est-à-dire la pression du fluide provoquant leur éclatement. En particulier, il est connu d'appliquer axialement sur des tuyaux constitués de matière thermoplastique un ou plusieurs faisceaux de fibres de renforcement continues imprégnées de matière thermodurcissable, de recouvrir le tout d'un ou de plusieurs faisceaux de fibres de renforcement que l'on enroule hélicoïdalement à leur surface et de soumettre au durcissement la matière thermodurcissable. Un exemple de tel procédé de renforcement est donné dans le document GB-A-2077880. Les tuyaux ainsi renforcés sont capables de résister à des pressions internes relativement élevées, mais présentent l'inconvénient d'une sensibilité élevée aux agressions mécaniques et chimiques extérieures, ainsi que celui d'une surface irrégulière.

Pour ces différentes raisons, les tuyaux renforcés sont souvent revêtus extérieurement d'une couche de finition de matière thermoplastique.

Il importe que la couche de finition adhère correctement au tuyau ; dans le cas contraire, la moindre fissure y apparaissant accidentellement pourrait notamment permettre à des produits extérieurs d'entrer en contact avec le tuyau proprement dit sur une grande partie de l'interface tuyau-couche de finition, ce qui pourrait faciliter la diffusion de ces produits au travers de la paroi du tuyau ou la dégradation de cette dernière, par exemple par corrosion ou dissolution. En outre, une mauvaise adhérence de la couche de finition pourrait dégrader ou rendre inhomogènes les propriétés mécaniques du tuyau revêtu.

On comprend dès lors qu'il importe, pour plusieurs raisons, que l'adhérence de la couche de finition au tuyau proprement dit soit élevée.

Pour revêtir des tuyaux composites comprenant un mandrin cylindrique extrudé à base de matière plastique renforcé par un ou plusieurs faisceaux de fibres de renforcement enroulés hélicoïdalement à sa surface on recourt généralement à la surextrusion (encore qualifiée d'extrusion-couchage), qui consiste à simplement déposer la couche de finition à la surface du tuyau, en continu. Cette extrusion-couchage peut être réalisée en filière ou à la sortie de filière. Ceci se fait classiquement en utilisant une tête de surextrusion en équerre, dans laquelle on injecte latéralement la matière plastique constitutive de la couche de finition à l'état fondu, le tuyau y entrant d'un côté pour en ressortir de l'autre revêtu de sa couche de finition. Un important inconvénient de cette technique de surextrusion est que la matière plastique constitutive de la couche de finition ne peut pas être injectée sous pression dans le dispositif de surextrusion. En effet, si elle était injectée sous pression, cette matière plastique fondue ne manquerait pas de s'échapper de ce dispositif de surextrusion par le côté d'entrée du tuyau ou du mandrin renforcé, ce qui serait particulièrement gênant. En raison de ce simple "dépôt" sans surpression de la couche de finition à la surface du tuyau, toutefois, son adhérence est généralement mauvaise, ce qui risque de conduire notamment aux inconvénients énumérés ci-dessus.

L'adhérence est d'autant plus mauvaise qu'on utilise dans des tuyaux composites des matières plastiques non compatibles.

Un autre problème lié à la couche de finition est qu'il convient généralement de donner à la surface extérieure du tuyau revêtu une grande précision dimensionnelle, afin notamment de permettre sa connexion sans fuite à des éléments de raccordement tels que manchons, etc. Les dispositifs de calibrage connus sont des dispositifs autonomes d'une grande complexité.

L'invention a dès lors pour objet une solution simple permettant d'appliquer, à la surface d'un tuyau comprenant un mandrin cylindrique extrudé renforcé par un ou plusieurs enroulements hélicoïdaux de fibres de renforcement continues, une couche de finition d'une manière garantissant à la fois sa bonne adhérence et le calibrage du tuyau revêtu ainsi obtenu.

A cette fin, la présente invention concerne une bague d'application d'une couche de finition de matière plastique C à la surface d'un tuyau comprenant un mandrin cylindrique extrudé renforcé par un ou plusieurs enroulements hélicoïdaux de fibres de renforcement continues, le diamètre d'entrée de ladite bague étant supérieur à son diamètre de sortie, la surface intérieure de ladite bague assurant en outre une variation dégressive du diamètre intérieur entre son entrée et sa sortie.

La matière plastique C peut être essentiellement constituée d'un ou plusieurs polymères quelconques. Avantageusement, elle est thermoplastique, c'est-à-dire que le ou les polymères dont elle est essentiellement constituée sont des polymères thermoplastiques. Si plusieurs polymères différents sont utilisés en mélange, ils doivent être compatibles entre eux, de manière notamment à ce que la couche de finition présente des propriétés mécaniques satisfaisantes. A titre de polymères thermoplastiques, on peut notamment citer les polyoléfines, dont par exemple le polyéthylène (PE), les polymères du chlorure de vinyle, dont par exemple le poly(chlorure de vinyle) (PVC), ainsi que les polymères dérivés du fluorure de vinylidène, dont par exemple le poly(fluorure de vinylidène) (PVDF). De bons résultats ont été obtenus à partir de polyoléfines, en particulier à partir de PE. Comme PE, on préfère utiliser le polyéthylène de moyenne densité (MDPE) ou de haute densité (HDPE). On préfère tout particulièrement que la matière plastique C soit essentiellement constituée de polyéthylène de haute densité (HDPE).

L'épaisseur de la couche de finition est déterminée classiquement en fonction du type de tuyau revêtu et des applications auxquelles il est destiné. Souvent, l'épaisseur de la couche de finition est faible, de préférence d'un ordre de grandeur sensiblement inférieur à l'épaisseur du mandrin. En particulier, l'épaisseur de la couche de finition est de l'ordre de 1 à 2 mm. La couche de finition a plusieurs fonctions : tout d'abord, elle protège physiquement le tuyau et ses matériaux de renforcement de toute dégradation mécanique, notamment au cours de la manutention, du transport et de l'installation. Ceci est particulièrement important dans le cas de tuyaux à base de matière plastique renforcés par un ou plusieurs faisceaux de fibres de renforcement continues enroulés hélicoïdalement à leur surface. Ensuite, la couche de finition peut comporter des pigments en facilitant l'identification, et/ou d'autres additifs tels que des stabilisants anti-UV. La couche de finition peut également assurer la protection chimique du tuyau et de ses matériaux de renforcement, notamment vis-à-vis de produits corrosifs et de produits susceptibles de détériorer l'adhérence des matériaux de renforcement au tuyau proprement dit. Cette couche peut en outre accroître l'imperméabilité du tuyau, et empêcher que certains produits susceptibles d'entrer en contact avec sa surface extérieure, par exemple des polluants présents à l'extérieur du tuyau, n'atteignent le fluide véhiculé. Elle peut encore, si son adhérence au tuyau proprement dit est bonne, participer à la reprise des efforts et améliorer ainsi sa résistance à l'éclatement.

Le tuyau peut comprendre un ou plusieurs matériaux connus à cet effet, tels que matières plastiques, métaux et/ou ciment. Il peut comprendre une ou plusieurs couches. En particulier, il peut s'agir d'un tuyau composite dont au moins la couche extérieure est essentiellement constituée de matière plastique. On préfère utiliser des tuyaux à base d'une matière plastique A répondant de manière analogue à la définition de la matière plastique C donnée ci-dessus.

On peut ajouter aux matières plastiques A et/ou C tout additif connu, par exemple un ou plusieurs pigments, adjuvants de mise en oeuvre, anti-oxydants, stabilisants, charges minérales, etc., pour autant que leur présence n'affecte pas sensiblement les propriétés mécaniques ni la compatibilité réciproque de ces matières plastiques.

Par bague, on entend désigner un solide comportant un orifice présentant une symétrie de révolution.

En général, le diamètre de sortie de la bague correspond approximativement à la dimension extérieure du tuyau augmentée de deux fois l'épaisseur souhaitée de la couche de finition. Il peut être très légèrement supérieur à la dimension finale du tuyau revêtu de la couche de finition afin de prendre en compte le retrait de la matière plastique à intervenir lors de son refroidissement.

Le profil de la surface intérieure de la bague est de préférence tel que l'angle que forme sa tangente avec l'axe du tuyau soit relativement faible à sa sortie. De préférence, cet angle est inférieur à 5°, La surface intérieure de la bague ne présente de préférence aucune discontinuité dans la variation de son diamètre. Cette surface intérieure peut avantageusement comporter, du côté de la sortie de la bague, une zone de section constante, c'est-à-dire une zone cylindrique. De bons résultats ont été obtenus en donnant à la surface intérieure de la bague, ou du moins à sa partie de section non constante, un profil hyperbolique, parabolique ou rectiligne.

La bague peut être réalisée à partir de tout matériau adéquat ou de toute combinaison de matériaux adéquats ; elle peut notamment être à base d'un métal tel que l'acier ou le bronze.

La surface intérieure de la bague présente très avantageusement un faible coefficient de frottement par rapport à la matière plastique C. A cette fin, la surface intérieure peut comprendre un matériau anti-adhérent. Par matériau anti-adhérent on entend désigner un matériau anti-adhérent à la matière plastique qui traverse la bague. La surface intérieure est souvent constituée essentiellement d'un matériau anti-adhérent. On peut notamment réaliser toute la bague dans un tel matériau. On peut encore revêtir intérieurement une bague constituée d'un matériau adéquat d'une mince couche d'un matériau anti-adhérent, par exemple d'un polymère fluoré tel que le polytétrafluoréthylène (PTFE). Si nécessaire, un adhésif peut être utilisé pour fixer ce matériau à l'intérieur de la bague.

Cette bague s'utilise généralement conjointement à un dispositif de surextrusion tel que décrit ci-dessus, permettant de déposer une couche de finition de matière plastique à la surface d'un tuyau. Un second objet de la présente invention concerne dès lors un dispositif d'application d'une couche de finition de matière plastique C à la surface d'un tuyau comprenant un mandrin cylindrique extrudé renforcé par un ou plusieurs enroulements hélicoïdaux de fibres de renforcement continues, comprenant un dispositif de surextrusion, qui se caractérise en ce qu'une bague telle que décrite ci-dessus est associée audit dispositif de surextrusion.

Le dispositif de surextrusion comprend un orifice circulaire d'entrée par lequel peut être introduit le tuyau, d'une dimension légèrement supérieure à celle du tuyau, et un orifice circulaire de sortie situé dans l'axe de l'orifice d'entrée. Il comprend encore un orifice latéral par lequel la matière plastique constitutive de la couche de finition est injectée à l'état fondu. Le dispositif de surextrusion est en outre conçu de façon à ce que la matière plastique fondue se répartisse de manière homogène sur toute la périphérie du tuyau renforcé. La matière plastique fondue peut entrer en contact avec le tuyau à l'intérieur du dispositif de surextrusion, celui-ci comportant un orifice unique de sortie par lequel sort le tuyau sur lequel est déposée la matière plastique C, ou à l'extérieur de ce dispositif, celui-ci comportant alors un orifice circulaire central par lequel sort le tuyau et un orifice périphérique concentrique (annulaire) par lequel sort la matière plastique C. A ce dispositif de surextrusion est associée une bague telle que décrite ci-dessus. Cette bague est généralement disposée dans l'axe de l'orifice de sortie du dispositif de surextrusion, à une faible distance de celui-ci. Elle peut très avantageusement lui être directement accolée. De cette façon, la matière plastique C constitutive de la couche de finition se trouve encore à une température élevée au moment où le tuyau sur lequel a été déposée la couche de finition traverse la bague, ce qui améliore l'efficacité de l'étape d'application, c'est-à-dire l'adhérence de la couche de finition au tuyau. De préférence, le diamètre de l'orifice d'entrée de la bague est légèrement supérieur ou égal à celui de l'orifice de sortie de la matière plastique C du dispositif de surextrusion.

Le dispositif utilisant une bague conforme à l'invention permet d'appliquer une couche de finition de matière plastique à la surface d'un tuyau renforcé de manière ferme et durable, tout en conférant simultanément au tuyau revêtu ainsi obtenu un diamètre extérieur constant et précis.

En outre, un autre avantage du dispositif de l'invention est sa simplicité. Le dispositif de l'invention a comme avantage de ne comporter aucune pièce mobile, et d'exercer sur la couche de finition une pression répartie de manière parfaitement homogène.

Par ailleurs, ce dispositif d'application s'utilise avantageusement en combinaison avec le dispositif de fabrication du tuyau renforcé. Dès lors, l'invention concerne également une installation pour la fabrication d'un tuyau comprenant un mandrin cylindrique extrudé renforcé par un ou plusieurs enroulements hélicoïdaux de fibres de renforcement continues, revêtu par une couche de finition de matière plastique C, comprenant un dispositif de fabrication du tuyau ainsi qu'un dispositif d'application d'une couche de finition tel que défini ci-dessus. Le dispositif de fabrication du tuyau peut être de tout type connu adapté à la nature du tuyau. Dans le cas d'un tuyau à base de matière plastique, notamment, il peut s'agir d'un dispositif d'extrusion, ou d'un dispositif de coextrusion si le tuyau comprend plusieurs couches de matière plastique. Le dispositif de fabrication du tuyau comprend également un dispositif d'enroulement d'un ou plusieurs faisceaux de fibres de renforcement autour de ce mandrin. Selon une variante avantageuse, le mandrin est renforcé par deux faisceaux de fibres de renforcement enroulés hélicoïdalement dans des sens opposés. De préférence, le ou les faisceaux de fibres de renforcement disposés hélicoïdalement autour du mandrin sont enroulés quasiment perpendiculairement à l'axe de celui-ci, par exemple à plus de 80°.

La matière plastique A répond de manière analogue à la définition de la matière plastique C donnée ci-dessus, et peut également contenir un ou plusieurs additifs tels que ceux cités ci-dessus. Si plusieurs polymères différents sont utilisés, en mélange ou en couches distinctes, pour le mandrin, ils doivent être compatibles entre eux, de manière à ce que le mandrin présente des propriétés mécaniques satisfaisantes.

Les fibres de renforcement utilisées dans le(s) faisceau(x) enroulé(s) autour du mandrin peuvent également être de tout type, par exemple des fibres de verte, de carbone ou d'aramide. On préfère utiliser des fibres de verte. Le diamètre des fibres est généralement de l'ordre de 7 à 100 µm. Ces fibres sont continues, ou du moins d'une très grande longueur, par exemple de l'ordre de plusieurs centaines de mètres.

De manière avantageuse, les fibres de renforcement sont préalablement imprégnées par une matière plastique B, et le faisceau de fibres de renforcement se présente ainsi sous la forme d'un COFIT (continuous fiber impregnated by a thermoplastic). Un tel faisceau peut en particulier être obtenu en imprégnant directement les fibres de renforcement par la matière plastique. Il peut également être obtenu en mettant en oeuvre un faisceau co-mêlé de fibres continues de renforcement et de fibres continues de matière plastique. Il peut encore être obtenu en mettant en oeuvre un faisceau de fibres de renforcement entre lesquelles a été dispersée la matière plastique en poudre. Dans ces deux derniers modes d'obtention, il est naturellement indispensable de chauffer le faisceau, avant son enroulement autour du mandrin, de manière à ce que la matière plastique fonde et imprègne de manière homogène les fibres de renforcement.

La matière plastique B répond de manière analogue à la définition de la matière plastique C donnée ci-dessus, et peut également contenir un ou plusieurs additifs tels que ceux cités ci-dessus. Si la matière plastique B comprend plusieurs polymères différents utilisés en mélange, ils doivent être compatibles entre eux, de manière à ce que le COFIT présente des propriétés mécaniques satisfaisantes.

Afin d'assurer une bonne adhérence du COFIT au mandrin, et donc une bonne reprise des efforts circonférentiels par le COFIT, la matière plastique B est de préférence compatible avec la matière plastique A, ou d'une nature chimique semblable. A titre de paires de matières plastiques de nature chimique semblable, on peut par exemple utiliser conjointement soit deux polymères de type oléfinique (par exemple deux polymères de l'éthylène) soit deux polymères de type vinylique (par exemple deux polymères du chlorure de vinyle ou deux polymères du fluorure de vinylidène). Ces matières plastiques peuvent être rendues compatibles par l'utilisation d'un ou plusieurs agents compatibilisants adéquats.

Pour améliorer l'adhérence entre le mandrin et le ou les COFIT, l'enroulement de ces derniers se fait de préférence après avoir porté le mandrin et/ou le(s) COFIT à une température superficielle proche de la température de fusion ou de ramollissement de leur matière plastique constitutive A et/ou B.

Pour la même raison, il est souhaitable que la matière plastique C soit également compatible avec la matière plastique B, ou de nature chimique semblable, ce qui permet d'obtenir une bonne adhérence entre la couche de finition et la "couche" que constitue(nt) le(s) COFIT à la surface du mandrin. Cette bonne adhérence est fortement souhaitable, car elle évite tout risque de délamination de la couche de finition. Elle peut également être obtenue par l'utilisation d'un ou plusieurs agents compatibilisants adéquats.

Lorsque les fibres de renforcement sont imprégnées par une matière plastique B, on utilise généralement des quantités respectives de matière plastique B et de fibres de renforcement telles que le COFIT ainsi constitué contienne de l'ordre de plusieurs centaines, voire plusieurs milliers de fibres par mm² de section. On donne généralement à la couche de renforcement une épaisseur de l'ordre de 0,002 à 0,01 fois le diamètre du mandrin, en fonction des propriétés de la couche de finition et de la résistance mécanique souhaitée du tuyau revêtu. Il est nécessaire que les fibres choisies soient chimiquement compatibles avec la matière plastique B ; pour accroître cette compatibilité, et donc leur adhérence à leur matrice, elles sont éventuellement revêtues d'un agent de couplage (ou d'ensimage) approprié. Dans le cas de fibres de verte, on peut par exemple utiliser à cette fin l'un des composés de la famille des silanes bien connus dans ce contexte.

Le dispositif d'application de la couche de finition est de préférence installé dans l'axe de la filière du dispositif d'extrusion et du dispositif de renforcement par enroulement, tous trois étant disposés à faible distance l'un de l'autre, afin que le mandrin extrudé et renforcé se trouve encore à une température superficielle élevée lors de l'application de la couche de finition. Si ce n'est pas le cas, le mandrin extrudé et renforcé est avantageusement réchauffé superficiellement avant l'application de la couche de finition, en évitant évidemment de l'amener à une température qui pourrait entraîner sa déformation sensible.

Le dispositif d'enroulement comprend généralement un ou plusieurs plateaux annulaires rotatifs, coaxiaux au mandrin extrudé et portant chacun un ou plusieurs dévidoirs de faisceaux de fibres de renforcement dont les axes sont sensiblement parallèles à celui du mandrin ; il permet d'enrouler ce(s) faisceau(x) hélicoïdalement à la surface du mandrin. Lorsque les fibres de renforcement sont imprégnées de matière plastique B, on associe avantageusement à chaque dévidoir de faisceaux de fibres de renforcement un dispositif de chauffage permettant d'amener la matière plastique B imprégnant les fibres à une température proche de sa température de fusion ou de ramollissement, avant qu'ils n'entrent en contact avec le mandrin.

La présente invention concerne également un procédé permettant l'application d'une couche de finition de matière plastique à la surface d'un tuyau comprenant un mandrin cylindrique extrudé renforcé par un ou plusieurs enroulements hélicoïdaux de fibres de renforcement continues de telle manière que leur adhérence soit élevée et que le tuyau revêtu soit d'un diamètre extérieur relativement constant. Plus précisément, un autre objet de l'invention concerne un procédé d'application d'une couche de finition de matière plastique C sur un tuyau comprenant un mandrin cylindrique extrudé renforcé par un ou plusieurs enroulements hélicoïdaux de fibres de renforcement continues, dans lequel le tuyau traverse un dispositif d'application d'une couche de finition tel que décrit ci-dessus.

Afin d'éviter tout engorgement de la bague d'application de la couche de finition, par la matière plastique C, il est avantageux que le débit de ladite matière plastique entrant dans la bague corresponde au débit sortant de la bague pour constituer la couche de finition.

En particulier, le procédé conforme à l'invention est particulièrement intéressant lorsque le tuyau comprend un mandrin à base d'une matière plastique A.

Les matières plastiques A, B et C sont telles que définies ci-dessus. En particulier, les matières plastiques mises en oeuvre sont avantageusement thermoplastiques. De préférence, les matières plastiques mises en oeuvre sont compatibles. Dans un mode de réalisation particulièrement intéressant, les matières plastiques mises en oeuvre sont essentiellement constituées de polyéthylène de haute densité.

Ainsi qu'il a été déjà mentionné, l'invention permet d'obtenir des tuyaux revêtus possédant un diamètre extérieur constant et précis malgré l'interposition d'un ou plusieurs enroulements de faisceaux de fibres de renforcement entre le mandrin et la couche de finition.

L'invention concerne dès lors également un tuyau comprenant un mandrin cylindrique extrudé autour duquel sont enroulés un ou plusieurs COFIT et revêtu extérieurement par une couche de finition, qui se caractérise en ce que la variation moyenne de la rugosité de la surface extérieure mesurée le long d'une génératrice dudit tuyau ne dépasse pas 0,4 mm. De préférence, cette variation ne dépasse pas 0,3 mm.

Par variation de la rugosité de la surface extérieure mesurée le long d'une génératrice du tuyau, on entend ici désigner la différence de niveau entre les creux et les sommets de la surface extérieure de la couche de finition du tuyau revêtu, mesurée le long d'une génératrice dudit tuyau revêtu. A partir de la répétition de cette mesure le long de différentes génératrices, on peut calculer la variation moyenne caractéristique.

Cette variation moyenne exprime notamment la qualité du calibrage. Elle traduit aussi la mesure dans laquelle les irrégularités dues aux enroulements de faisceaux de fibres de renforcement ont pu être "compensées" par la couche de finition.

Le mandrin, le COFIT et la couche de finition du tuyau sont tels que déjà définis ci-dessus. En particulier, le tuyau revêtu selon l'invention a un diamètre extérieur d'au moins 0,06 m, de préférence au moins 0,11 m. Avantageusement, le tuyau revêtu selon l'invention a un diamètre extérieur ne dépassant pas 1 m, de préférence ne dépassant pas 0,63 m. De préférence, le tuyau revêtu selon l'invention est un tuyau rigide.

Le tuyau revêtu peut encore comprendre éventuellement d'autres couches que le mandrin, le ou les enroulements de fibres de renforcement et la couche de finition. Par exemple une telle couche supplémentaire peut être une couche d'imperméabilisation pouvant être constituée d'une feuille métallique enroulée autour du mandrin et de l'enroulement de fibres de renforcement, et sur laquelle est appliquée la couche de finition.

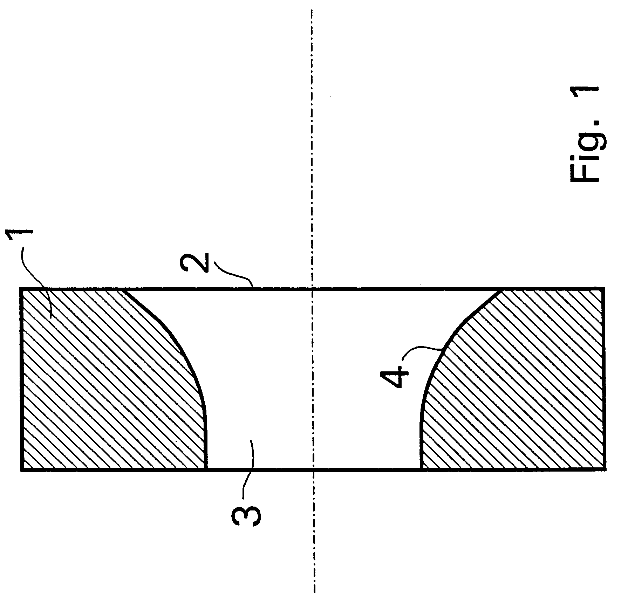

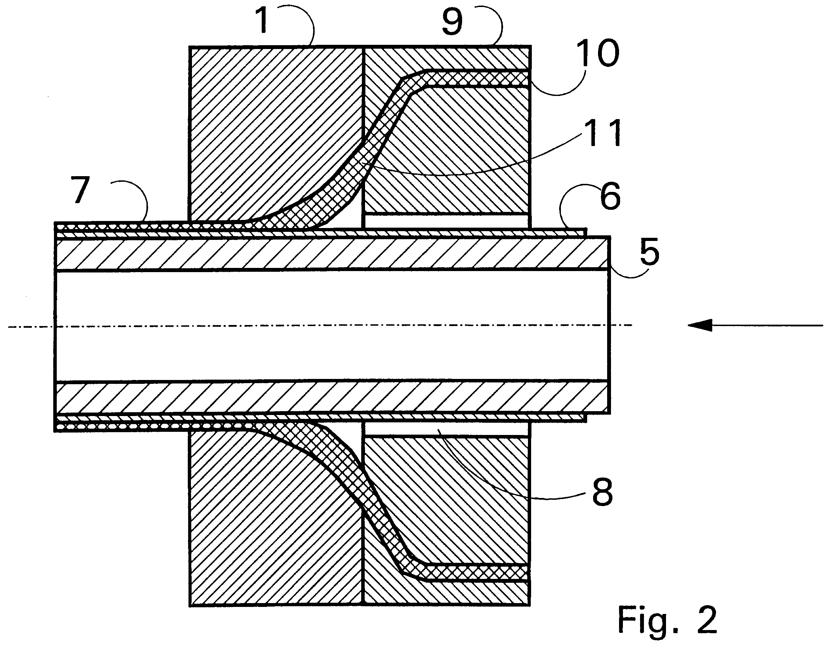

Les figures 1 et 2 ci-jointes illustrent de manière non limitative la présente invention.

La figure 1 représente en coupe une bague (1) de section circulaire conforme à l'invention, présentant une entrée (2) et une sortie (3) de diamètre inférieur. La surface intérieure (4) de cette bague assure une variation dégressive de son diamètre intérieur.

La figure 2 représente un dispositif d'application d'une couche de finition (7) à la surface d'un tuyau composite de section circulaire comprenant un mandrin (5) à base de matière plastique A renforcé par enroulement hélicoïdal de faisceaux de fibres de renforcement (6). Ce dispositif d'application comprend un dispositif de surextrusion (9) auquel est associée une bague (1) conforme à l'invention, disposée dans l'axe du dispositif de surextrusion. Ce dernier comprend un orifice central (8) que traverse le tuyau renforcé (5, 6), ainsi qu'un espace intérieur annulaire (10) alimenté en matière plastique C fondue par une extrudeuse non représentée. Cet espace intérieur converge et se termine par un orifice périphérique annulaire (11), par lequel s'écoule la matière plastique C fondue et dont le diamètre extérieur est approximativement égal au diamètre de l'orifice d'entrée de la bague (1). Celle-ci est contiguë au dispositif de surextrusion. Les exemples ci-après illustrent également de manière non limitative l'invention.

### Exemple 1R (de comparaison)

On a fabriqué un tuyau revêtu, de section circulaire, d'un diamètre extérieur moyen de 110,0 mm, en extrudant tout d'abord un mandrin cylindrique d'un diamètre extérieur de 105,8 mm et d'une épaisseur moyenne de 6,74 mm à partir d'un polyéthylène de haute densité (HDPE) renforcé par des fibres de verte à raison de 20 % en poids. On a enroulé autour de ce mandrin deux COFIT, chacun d'une épaisseur de 0,30 mm, d'une largeur avant mise en oeuvre de 10 mm, et comprenant environ 4 000 fibres de verte d'un diamètre d'environ 17 µm. Les fibres de verte avaient été imprégnées par un mélange de HDPE ELTEX® A3300 de SOLVAY et de HDPE fonctionnalisé POLYBOND® 3009, dans des proportions pondérales 95/5, afin de constituer les COFIT.

L'enroulement des COFIT s'est fait sous traction à 87,35° par rapport à l'axe du mandrin, après les avoir préchauffés à environ 220 °C. Une couche de finition d'une épaisseur moyenne de 1,49 mm, constituée de PEHD ELTEX TUB 71 de SOLVAY, a ensuite été simplement déposée par extrusion-couchage à la surface de ce mandrin renforcé, sans utilisation d'une bague d'application de cette couche de finition.

On a mesuré la variation de la rugosité de la surface extérieure le long de plusieurs génératrices du tuyau. Les résultats de ces mesures se sont étalés de 0,36 à 0,53 mm avec une variation moyenne de 0,4375 mm.

Le tuyau a également été soumis à un test de résistance à la pression interne, tel que décrit dans la norme ISO 1167(1973). A 20 °C et sous 70.10⁵ Pa, des phénomènes d'infiltration du liquide contenu dans le tuyau sont apparus, aux extrémités du tuyau, à l'interface entre les COFIT et la couche de finition, après des temps compris entre 2 et 50 heures. Ces infiltrations ont entraîné une fissuration de la couche de finition et ont empêché le maintien de la pression à l'intérieur du tuyau.

### Exemple 2 (selon l'invention)

On a fabriqué un tuyau revêtu, de section circulaire, d'un diamètre extérieur moyen de 110,6 mm, en extrudant tout d'abord un mandrin cylindrique d'un diamètre extérieur de 105,6 mm et d'une épaisseur moyenne de 7,10 mm à partir d'un polyéthylène de haute densité (HDPE) renforcé par des fibres de verte à raison de 20 % en poids. On a enroulé autour de ce mandrin deux COFIT, chacun d'une épaisseur de 0,30 mm, d'une largeur avant mise en oeuvre de 10 mm, et comprenant environ 4 000 fibres de verte d'un diamètre d'environ 17 µm. Les fibres de verte avaient été imprégnées par un mélange de PEHD ELTEX A3300 de SOLVAY et de HDPE fonctionnalisé POLYBOND 3009, dans des proportions pondérales 95/5, afin de constituer les COFIT.

L'enroulement des COFIT s'est fait sous traction à 87,35° par rapport à l'axe du mandrin, après les avoir préchauffés à environ 220 °C, et sous traction. Une couche de finition d'une épaisseur moyenne de 1,89 mm, constituée de PEHD ELTEX TUB 71 de SOLVAY, a ensuite été déposée par extrusion-couchage à la surface de ce mandrin renforcé, à l'intervention d'une bague d'application directement accolée à la sortie du dispositif de surextrusion.

Cette bague d'application était constituée d'acier de type 17-4-PH et revêtue intérieurement d'une couche d'un polymère fluoré TEFLON®. L'orifice de la bague était de section circulaire, de diamètre d'entrée de 125 mm et de diamètre de sortie de 111,8 mm. La longueur de la bague était de 27 mm. La surface intérieure de la bague était telle que l'angle que formait la tangente de son profil avec l'axe de la bague (et donc du tuyau) était de 25° à l'entrée de la bague et le profil était rectiligne dans cette zone d'entrée. Du côté de la sortie de la bague, l'orifice comportait une zone de diamètre constant, soit une zone cylindrique. Entre ces 2 zones, la continuité du profil de la surface intérieure de la bague était assurée par un raccordement en arc de cercle d'un rayon de 25 mm centré à 12 mm du côté de sortie de la bague.

On a mesuré la variation de la rugosité de la surface extérieure le long de plusieurs génératrices du tuyau. Les résultats de ces mesures se sont étalés de 0,14 à 0,29 mm avec une variation moyenne de 0,235 mm.

Le tuyau a également été soumis à un test de résistance à la pression interne, tel que décrit dans la norme ISO 1167 (1973). A 20 °C et sous 86.10⁵ Pa, le tuyau a résisté 174 heures, période au terme de laquelle il s'est rompu, sans infiltration ni fissuration préalables telles que dans l'exemple de comparaison ci-dessus. A 15.10⁵ Pa, le tuyau résiste plusieurs milliers d'heures (typiquement 3 000 heures) sans rupture, fissuration ni infiltration.

## Revendications

1. Bague (1) d'application d'une couche de finition de matière plastique C à la surface d'un tuyau comprenant un mandrin cylindrique extrudé renforcé par un ou plusieurs enroulements hélicoïdaux de fibres de renforcement continues, le diamètre d'entrée (2) de ladite bague étant supérieur à son diamètre de sortie (3), la surface intérieure (4) de ladite bague assurant en outre une variation dégressive du diamètre intérieur entre son entrée et sa sortie.

2. Bague selon la revendication 1, dont la surface intérieure (4) est constituée essentiellement d'un matériau anti-adhérent.

3. Bague selon l'une quelconque des revendications précédentes, dont le profil de la surface intérieure (4) est tel que l'angle que forme sa tangente avec l'axe du tuyau soit inférieur à 5° à la sortie de celle-ci.

4. Dispositif d'application d'une couche de finition de matière plastique C à la surface d'un tuyau comprenant un mandrin cylindrique extrudé renforcé par un ou plusieurs enroulements hélicoïdaux de fibres de renforcement continues, comprenant un dispositif de surextrusion (9), caractérisé en ce qu'une bague (1) selon l'une quelconque des revendications précédentes est associée audit dispositif de surextrusion.

5. Installation pour la fabrication d'un tuyau comprenant un mandrin cylindrique extrudé renforcé par un ou plusieurs enroulements hélicoïdaux de fibres de renforcement continues, revêtu par une couche de finition (7) de matière plastique C, comprenant un dispositif de fabrication d'un tuyau ainsi qu'un dispositif d'application d'une couche de finition selon la revendication 4.

6. Installation selon la revendication 5, dans laquelle le dispositif de fabrication du tuyau comprend un dispositif d'extrusion d'un mandrin (5) à base de matière plastique A et un dispositif d'enroulement d'un ou plusieurs faisceaux de fibres de renforcement (6) autour de ce mandrin.

7. Procédé d'application d'une couche de finition (7) de matière plastique C sur un tuyau comprenant un mandrin cylindrique extrudé renforcé par un ou plusieurs enroulements hélicoïdaux de fibres de renforcement continues, dans lequel le tuyau traverse un dispositif d'application d'une couche de finition conforme à la revendication 4.

8. Procédé selon la revendication précédente, dans lequel le tuyau comprend un mandrin cylindrique extrudé (5) à base d'une matière plastique A.

9. Procédé selon la revendication précédente, dans lequel le faisceau de fibres de renforcement est un COFIT.

10. Procédé selon l'une quelconque des revendications 7 à 9, dans lequel les matières plastiques mises en oeuvre sont essentiellement constituées de polyéthylène de haute densité.

11. Tuyau comprenant un mandrin cylindrique extrudé autour duquel sont enroulés un ou plusieurs COFIT et revêtu extérieurement par une couche de finition, caractérisé en ce que la variation moyenne de la rugosité de la surface extérieure mesurée le long d'une génératrice dudit tuyau ne dépasse pas 0,4 mm.
